# EUROPÄISCHE PATENTSCHRIFT

(11) **EP 3 329 233 B1**
(45) Veröffentlichungstag und Bekanntmachung des Hinweises auf die Patenterteilung: **04.03.2020**
(21) Anmeldenummer: 16734265.8
(22) Anmeldetag: 28.06.2016
(51) Int. Cl.: G01K 15/00

(54) **VERFAHREN UND VORRICHTUNG ZUR IN SITU KALIBRIERUNG EINES THERMOMETERS**
METHOD AND DEVICE FOR THE IN SITU CALIBRATION OF A THERMOMETER
PROCÉDÉ ET DISPOSITIF D'ÉTALONNAGE SUR SITE D'UN THERMOMÈTRE

(30) Priorität: 29.07.2015 DE 102015112425
(43) Veröffentlichungstag der Anmeldung: 06.06.2018
(73) Patentinhaber: Endress+Hauser Wetzer GmbH+Co. KG, 87484 Nesselwang (DE)
(72) Erfinder: UMKEHRER, Alfred, 87659 Hopferau (DE); VRDOLJAK, Pavo, 87484 Nesselwang (DE)
(74) Vertreter: Andres, Angelika Maria
(86) Internationale Anmeldenummer: PCT/EP2016/064985
(87) Internationale Veröffentlichungsnummer: WO 2017/016776

(56) Entgegenhaltungen:
- DE-A1- 19 941 731
- JP-A- 2012 122 862
- US-A1- 2012 051 389

## Beschreibung

Die Erfindung bezieht sich auf eine Vorrichtung zur Bestimmung und/oder Überwachung der Temperatur eines Mediums umfassend zumindest einen Temperatursensor und zwei Referenzelemente zur in situ Kalibrierung und/oder Validierung des Temperatursensors. Ferner bezieht sich die Erfindung auf ein Verfahren zur in situ Kalibrierung einer entsprechenden Vorrichtung.

Die Kalibrierung von Thermometern wird heutzutage üblicherweise in Kalibrierbädern, Öfen oder Fixpunkteinrichtungen durchgeführt. Eine entsprechende Fixpunktzelle ist beispielsweise in der Patentschrift DE102004027072B3 beschrieben. Allerdings muss bei diesen Methoden üblicherweise das Thermometer aus der jeweiligen Messstelle ausgebaut werden. Um ein Thermometer dagegen im eingebauten Zustand kalibrieren zu können, ist aus der DE19941731A1 eine miniaturisierte und in ein Thermometer integrierte, mit einer Fixpunktsubstanz, z. B. einem Metall oder einer eutektischen Legierung, gefüllten Fixpunktzelle bekannt geworden. In diesem Falle ist jedoch eine zusätzliche Zelle zum Kapseln der Fixpunktsubstanz erforderlich, was die Dynamik des Sensors, insbesondere die Ansprechzeit auf eine Temperaturänderung, verschlechtert. Außerdem kann es gegebenenfalls passieren, dass die Fixpunktsubstanz aus der Zelle austritt, was zu einer Beschädigung oder sogar zu einer Zerstörung des Thermometers führen kann.

Es wäre somit wünschenswert, eine Kalibrierung und/oder Validierung eines Thermometers im eingebauten Zustand, also in situ, durchführen zu können, bei welcher die genannten Nachteile nicht auftreten.

Im Prinzip lassen sich zur Bestimmung einer Temperatur verschiedenste physikalische und/oder chemische spezifische temperaturabhängige Materialeigenschaften ausnutzen. Dabei kann es sich entweder um eine an einem bestimmten charakteristischen Temperaturpunkt auftretende, insbesondere abrupte, Änderung der jeweiligen Eigenschaften oder auch um eine kontinuierliche Änderung dieser Eigenschaft in Form einer charakteristischen Kennlinie handeln. Beispielsweise stellt die Curie-Temperatur eines ferromagnetischen Materials einen charakteristischen Temperaturpunkt für dieses Material dar. In dieser Hinsicht ist aus der DE 4032092C2 ein Verfahren zur Ermittlung der Curie-Temperatur bekannt geworden, bei welchem mittels eines Differential-Scanning-Thermoanalysators eine abrupte Änderung der aufgenommenen Wärmemenge im Bereich der Curie-Temperatur festgestellt wird. In der DE19702140A1 wiederum werden eine Vorrichtung und ein Verfahren zur Messung der Temperatur eines rotierenden Trägerteils beschrieben mit einem Temperaturfühler, welcher einen ferro-oder paramagnetischen Werkstoff aufweist, der im jeweils interessanten Temperaturbereich eine temperaturabhängige Änderung seiner Polarisation zeigt. Es wird also eine Kennlinie der temperaturabhängigen Polarisation zur Bestimmung der Temperatur herangezogen.

Ein weiteres Beispiel, welches aus der DE19805184A1 bekannt geworden ist, beschreibt die Ermittlung der Temperatur eines piezoelektrischen Elements anhand seiner Kapazität. Ähnlich bezieht sich die Patentschrift DE69130843T2 auf ein Verfahren und eine Vorrichtung zur Bestimmung der Temperatur eines piezoelektrischen Kristalloszillators.

Das Heranziehen bestimmter charakteristischer Temperaturpunkte oder Kennlinien eignet sich grundsätzlich auch zur Kalibrierung und/oder Validierung von Thermometern.

So ist in der EP1247268B2 beispielsweise ein Verfahren zur in situ Kalibrierung mehrerer integrierter Temperatursensoren anhand von Kennlinien eines oder mehrerer Referenzelemente in Form von sekundären Temperatursensoren beschrieben, welche Referenzelemente in einen Thermometereinsatz zusätzlich zu einem primären Temperatursensor eingebaut sind. Damit eine Kalibrierung erfolgen kann, unterscheiden sich die jeweils verwendeten Referenzelemente in Bezug auf den Aufbau und/oder das jeweils verwendete Material vom primären Temperatursensor, was in unterschiedlichen Kennlinienverläufen resultiert. Nachteilig hierbei ist jedoch, dass üblicherweise auch die Kennlinien der Referenzelemente Alterungseffekten und/oder Sensordrift unterliegen.

Zur Vermeidung derartiger Nachteile sind aus der DE102010040039A1 eine Vorrichtung und ein Verfahren zur in situ Kalibrierung eines Thermometers mit einem Temperatursensor und einem Referenzelement zur Kalibrierung des Temperatursensors bekannt geworden, bei welcher das Referenzelement wenigstens teilweise aus einem ferroelektrischen Material besteht, welches im zur Kalibrierung des Temperatursensors relevanten Temperaturbereich eine Phasenumwandlung bei zumindest einer vorgegebenen Temperatur erfährt. Die Kalibrierung wird also anhand des charakteristischen Temperaturpunkts eines Phasenübergangs eines ferroelektrischen Materials, also anhand einer materialspezifischen Eigenschaft vorgenommen. Je nach Anzahl der verbauten Referenzelemente kann auf diese Weise sowohl eine sogenannte 1-Punkt- als auch eine Mehrpunkt- Kalibrierung und/oder Validierung vorgenommen werden. Da die Kennlinien des jeweils verwendeten Temperatursensors in der Regel nicht, oder zumindest nicht über den gesamten damit erfassbaren Temperaturbereich, gleichmäßig und/oder linear verlaufen, kann mittels einer Mehrpunkt- Kalibrierung und/oder Validierung normalerweise ein sehr viel genauerer Abgleich der Kennlinien des Temperatursensors mit den jeweiligen Referenztemperaturen erfolgen. Auf der anderen Seite besticht eine Vorrichtung mit einem einzigen Referenzelement durch einen vergleichsweise einfacheren konstruktiven Aufbau, da beispielsweise lediglich ein Referenzelement geeignet angeordnet und kontaktiert werden muss.

Die JP2012122862 offenbart ein Taupunktmessgerät.

Die US2012/0051389 offenbart ein Verfahren und eine Vorrichtung zum Kalibrieren eines Thermometers in situ.

Der vorliegenden Erfindung liegt deshalb die Aufgabe zugrunde, eine Vorrichtung und Verfahren bereitzustellen, mittels welcher/welchem auf einfache Weise eine Kalibrierung und/oder Validierung eines Temperatursensors über seinen gesamten Temperaturbereich möglich ist.

Diese Aufgabe wird gelöst durch eine Vorrichtung gemäß Anspruch 1.

Die Erfindung betrifft also eine in situ Kalibrierung und/oder Validierung eines Thermometers. Ein Temperatursensor (Primärsensor) wird mit Hilfe von beispielsweise ebenfalls im Thermometereinsatz befindlichen Sekundärsensoren (Referenzelement) kalibriert und/oder validiert, ähnlich wie im Falle der DE102010040039A1, deren Offenbarungsgehalt der vorliegenden Erfindung vollumfänglich zuzuordnen ist.

Ein Phasenübergang zweiter Ordnung nach der Ehrenfestklassifikation beinhaltet eine Unstetigkeit in der zweiten Ableitung einer thermodynamischen Größe wie beispielsweise dem Druck, dem Volumen, der Enthalpie, oder der Entropie als Funktion beispielsweise der Temperatur. Phasenübergänge zweiter Ordnung betreffen unter anderem den Übergang von der ferromagnetischen in die paramagnetische Phase oder umgekehrt, von der ferroelektrischen in die paraelektrische Phase oder auch der von einem Normalmetall zu einem Supraleiter oder umgekehrt. Üblicherweise gehen Phasenübergänge mit der Änderung einer bestimmten spezifischen Materialeigenschaft einher, beispielsweise mit einem Wechsel der Kristallstruktur, oder einem Wechsel in den magnetischen, elektrischen oder dielektrischen Eigenschaften. Diese materialspezifischen Änderungen sind für das jeweilige Referenzelement bekannt und können für eine Kalibrierung und/oder Validierung herangezogen werden. Dabei können die zumindest zwei Referenzelemente einen oder mehrere Phasenübergänge, insbesondere Phasenübergänge in der festen Phase des jeweils verwendeten Materials, aufweisen. Jeder Phasenübergang findet bei einem bestimmten charakteristischen fixen und langzeitstabilen Temperaturwert statt, so dass für das Referenzelement im Prinzip keine Drift und/oder keine Alterungseffekte berücksichtigt werden müssen.

Die Verwendung von zumindest zwei Referenzelementen ermöglicht eine Mehrpunkt-Kalibrierung, welche auf den genauen Verlauf der Kennlinie des Temperatursensors abgestimmt ist. Vorteilhaft können die Materialien für die zumindest zwei Referenzelemente derart gewählt werden, dass die jeweiligen Phasenübergangstemperaturen sich voneinander unterscheiden, insbesondere in Abschnitten unterschiedlicher Steigung der Kennlinie des jeweiligen Temperatursensors liegen. Je nach Einsatzbereich und Kennlinienverlauf des jeweils verwendeten Temperatursensors können dann beliebig viele Referenzelemente eingesetzt werden, derart, dass eine genaue Kalibrierung und/oder Validierung über den gesamten Temperaturbereich des Temperatursensors ermöglicht wird, bzw. derart dass die jeweiligen Phasenübergangstemperaturen auf die jeweilige Anwendung abgestimmt sind.

Erfindungsgemäß werden die zumindest zwei Referenzelemente über genau zwei Anschlussdrähte kontaktiert. Dadurch ergibt sich ein besonders einfacher konstruktiver Aufbau der jeweiligen Vorrichtung, und damit einhergehend eine im Vergleich zu komplizierteren Aufbauten deutlich geringere Fehleranfälligkeit. Dies betrifft nicht nur den Aufbau, sondern auch die Durchführung der jeweiligen Kalibrierung und/oder Validierung, wie im Zusammenhang mit dem erfindungsgemäßen Verfahren noch erläutert werden wird.

Es ist von Vorteil wenn es sich zumindest bei einem der zumindest zwei, insbesondere in Form eines Festkörpers vorliegenden, Materialien um ein ferroelektrisches Material oder um ein ferromagnetisches Material handelt.

Ein ferroelektrisches Material, auch Ferroelektrikum genannt, ist ein Material, welches unterhalb einer sogenannten materialspezifischen ferroelektrischen Curie-Temperatur auch ohne dass ein elektrisches Feld angelegt ist, eine elektrische Polarisation aufweisen kann. Dieses Phänomen ist entsprechend nur im Falle von Kristallstrukturen zu beobachten, bei welchen die Ausbildung einer polaren Achse möglich ist. Bei Überschreiten der ferroelektrischen Curie-Temperatur findet ein Phasenübergang vom ferroelektrischen in den paraelektrischen Zustand, oder umgekehrt, statt, welcher mit dem Verschwinden oder der Ausbildung einer Polarisierung des jeweiligen Materials einhergeht. Bei einem solchen Phasenübergang kann dann beispielsweise ein markanter Verlauf der Dielektrizitätskonstanten als Funktion der Temperatur beobachtet werden, welcher für die Kalibrierung und/oder Validierung des Temperatursensors herangezogen werden kann. Ähnlich verhält es sich bei Verwendung eines ferromagnetischen Materials. Bei der sogenannten Curie-Temperatur findet ein Phasenübergang vom ferromagnetischen in den paramagnetischen Zustand, oder umgekehrt statt, wobei eine Magnetisierung des jeweiligen Materials jeweils oberhalb der Curie-Temperatur verschwindet.

Erfindungsgemäß wird also eine Kalibrierung und/oder Validierung eines Temperatursensors mittels zumindest zweier in ein Thermometer integrierter Referenzelemente vorgeschlagen, welche jeweils zumindest eine charakteristische Temperatur, also eine materialspezifische Fixpunkttemperatur (z.B. die Curie-Temperatur oder ferroelektrische Curie-Temperatur) aufweisen. Anhand dieser Temperaturen kann der eigentliche Temperatursensor regelmäßig rekalibriert - sprich die Abweichung seiner Anzeige von der materialspezifischen Fixpunkttemperatur - ermittelt werden. Vorteilhaft handelt es sich dabei um eine Mehrpunkt-Kalibrierung, bei welcher die jeweiligen Phasenübergangstemperaturen auf den Kennlinienverlauf des Temperatursensors in Bezug auf die gewünschte Anwendung optimal abgestimmt werden.

Im Gegensatz zum Stand der Technik wird also nicht eine oft nur eingeschränkt bekannte temperaturspezifische Kennlinienänderung eines Referenzelements, sondern vielmehr eine Abweichung von mehreren materialspezifischen charakteristischen Temperaturpunkten bestimmt und ausgewertet. Auftretende Kennlinienänderungen des Temperatursensors lassen sich auf diese Weise genau, vollständig und reproduzierbarer über eine solche Mehrpunkt-Kalibrierung auch über längere Zeit detektieren und dokumentieren. Darauf aufbauend kann eine automatische Selbstvalidierung und Driftvorhersage des Temperatursensorelements erfolgen. Sowohl die konkrete Mehrpunkt-Kalibrierung an den Fixpunkttemperaturen als auch eine gegebenenfalls davon abgeleitete Validierung und/oder Alterungsüberwachung des Thermometers bzw. des Temperatursensors können zu diesem Zweck in einer Auswerteelektronik, wie beispielsweise einem Temperaturtransmitter, implementiert werden.

Wenn das jeweilige Material zudem in Form eines Festkörpers vorliegt, ist eine besonders einfache Integration des jeweiligen Referenzelements in das Thermometer möglich, da keine separat gekapselte Zelle oder ähnliches notwendig ist. Ferner wird das Ansprechverhalten des Temperatursensors auf Temperaturänderungen nicht beeinträchtigt.

Es kann von Vorteil sein, wenn zumindest eines der zumindest zwei Materialien mit Fremdatomen dotiert ist, insbesondere um die Phasenübergangstemperatur und/oder die Bildung von Domänen zu beeinflussen.

Weiterhin kann zumindest eines der zwei Materialien bei einer charakteristischen Temperatur, welche nicht einer Phasenübergangstemperatur entspricht, eine Änderung zumindest einer materialspezifischen Eigenschaft aufweisen. Beispielsweise kann es im Falle eines ferroelektrischen Materials auch unabhängig von der ferroelektrischen Curie-Temperatur zu einem Wechsel der Kristallstruktur und damit einhergehend in den elektrischen bzw. dielektrischen oder volumetrischen Eigenschaften kommen. Bei Bariumtitanat ist dies beispielsweise auch bei Temperaturen von ca. -90° C und ca. 5° C der Fall.

In einer Ausgestaltung führt zumindest ein Phasenübergang in zumindest einem der zumindest zwei Materialien zu einer Änderung der Kristallstruktur, und/oder zu einer Volumenänderung und/oder zu einer Änderung, insbesondere einer sprunghaften Änderung, der dielektrischen oder elektrischen Eigenschaften des jeweiligen Materials. Diese Eigenschaft wird dann zur Kalibrierung und/oder Validierung herangezogen.

Es ist von Vorteil, wenn zumindest ein Phasenübergang in zumindest einem der zumindest zwei Materialien mit einem Übergang von einem paramagnetischen zu einem ferromagnetischen, von einem ferromagnetischen in einen paramagnetischen, von einem ferroelektrischen zu einem paraelektrischen und/oder von einem paraelektrischen zu einem ferroelektrischen Zustand einhergeht.

Bevorzugt erfolgt der Phasenübergang, insbesondere die damit einhergehende Änderung der zumindest einen physikalischen und/oder chemischen Eigenschaft, gekennzeichnet durch eine diese Eigenschaft charakterisierende physikalische oder chemische Größe, des jeweiligen Materials sprungartig bei der jeweiligen Phasenübergangstemperatur. Dies äußert sich beispielsweise in einem stufenartigen Verlauf dieser Größe als Funktion der Temperatur im Bereich der Phasenübergangstemperatur. Dabei gilt es zu beachten, dass gegebenenfalls eine Hysterese der jeweiligen Größe auftritt.
In einer bevorzugten Ausgestaltung der Vorrichtung sind der Temperatursensor und die zumindest zwei Referenzelemente in einem einzigen Sensorkopf angeordnet. Neben einer besonders kompakten Bauweise sind durch eine derartige Anordnung der Temperatursensor sowie die zumindest zwei Referenzelemente im Wesentlichen derselben (Raum-) Umgebungstemperatur ausgesetzt, da der Sensorkopf Teil des Thermometers ist, der der Umgebung des Thermometers ausgesetzt ist, deren Temperatur gemessen werden soll. Dies ist besonders hinsichtlich der bevorzugten Verwendung des Thermometers von Nutzen.

Eine erfindungsgemäße Vorrichtung findet unter anderem Anwendung in industriellen Anlagen der Lebensmittelindustrie oder Anlagen in denen pharmazeutische Produkte hergestellt werden und/oder Sterilisationsmethoden wie Clean-In-Place, kurz CIP, oder Steam-In-Place, kurz SIP, zum Einsatz kommen. Bei den genannten Verfahren wird teilweise mit heißem Dampf oder Wasser mit einer Temperatur zwischen 120° C und 140° C sterilisiert. Dieser Prozess kann dann zum Kalibrieren des Thermometers eingesetzt werden, wenn beispielsweise zumindest ein Referenzelement aus Bariumtitanat mit einer ferroelektrischen Curie-Temperatur von 125°C eingesetzt wird.

Alternativ können die zumindest zwei Referenzelemente jedoch auch in Reihe geschaltet sein.

Es ist bei dieser Ausgestaltung von Vorteil, wenn das Gesamt-Referenzelement und der Temperatursensor im Wesentlichen direkt nebeneinander oder übereinander angeordnet sind, wobei zumindest eine zumindest teilweise beschichtete erste Seitenfläche des Gesamt-Referenzelements kleiner ist als eine erste dem Gesamt-Referenzelement zugewandte und an das Gesamt-Referenzelement angrenzende Seitenfläche des Temperatursensors, wobei ein erster Anschlussdraht zur Kontaktierung des Gesamt-Referenzelements im Bereich der ersten Seitenfläche des Gesamt-Referenzelements angebracht ist, und wobei ein zweiter Anschlussdraht an der ersten Seitenfläche des Temperatursensors angebracht ist.

Alternativ ist es ebenso von Vorteil, wenn die zumindest eine zumindest teilweise beschichtete Seitenfläche des Gesamt-Referenzelements derart ausgestaltet ist, dass zumindest ein erster und ein zweiter Teilbereich beschichtet sind, welche beiden Teilbereiche durch eine elektrisch isolierende Trennschicht voneinander isoliert sind, wobei zumindest die beiden Teilbereiche jedes der zumindest zwei Referenzelemente zumindest teilweise bedecken.

In einer weiteren Ausgestaltung der Vorrichtung unterscheiden sich zumindest die erste und die zweite Phasenübergangstemperatur um zumindest 1K.

Für die konkrete Ausgestaltung eines Referenzelements sind mehrere Lösungen denkbar.

Zum Beispiel kann zumindest das Gesamt-Referenzelement zumindest ein Kondensatorelement mit zumindest zwei Dielektrika bilden, wobei jedes der zumindest zwei Dielektrika zumindest einen Phasenübergang zweiter Ordnung aufweist. Dann kann beispielsweise eine oftmals sprungartig auftretende Änderung der dielektrischen Eigenschaften zumindest eines Referenzelements über die entsprechende Änderung seiner elektrischen Kapazität detektiert werden. Dabei kann die Messung der Kapazität nach einem aus dem Stand der Technik bekannten Messprinzip vorgenommen werden. Die geometrische Ausgestaltung des zumindest einen Kondensatorelements und/oder die Elektrodenanordnung sind relativ frei wählbar. Denkbar ist z.B. eine Ausführung als Plattenkondensator oder als Zylinder.

Alternativ kann zumindest das Gesamt-Referenzelement als Trägersubstrat für den Temperatursensor, insbesondere für einen Temperatursensor in Form eines Widerstandselments, dienen. Insbesondere können der Temperatursensor und zumindest eines der zumindest zwei Referenzelemente auf einem einzigen Trägersubstrat angeordnet sein. In diesem Fall werden beispielsweise mit einem Phasenübergang einhergehende Volumenänderungen detektiert, welche eine charakteristische Änderung des ohmschen Widerstandes der Widerstandsstruktur bewirken. Ein derartiges Widerstandselement kann ferner mit einer Metallisierungsschicht auf der Trägersubstratunterseite, versehen werden. In diesem Fall lassen sich gleichzeitig Messungen des ohmschen Widerstands sowie Messungen der Kapazität durchführen. Insbesondere kann der Temperatursensor so mit zumindest einem Referenzelement in einem Sensoraufbau vereint werden, derart, dass sie im Wesentlichen derselben (Umgebungs-)Temperatur ausgesetzt sind. Das Widerstandselement kann, beispielweise als PT100 ausgeführt, als Sensor zur Messung der Temperatur genutzt werden. Die Kapazitätsmessung des Kondensatorelements kann dann zur Bestimmung der Phasenumwandlungstemperatur und/oder als Kalibrierreferenz für das Widerstandselement dienen.

Im Falle, dass das Gesamt-Referenzelement aus zumindest zwei ferroelektrischen Materialien zusammengesetzt ist, kann es von Vorteil sein, wenn zumindest eine zur Polarisation des ersten und/oder zweiten Materials dienende Spannung anlegbar ist. Dafür weist die Vorrichtung entsprechende Mittel auf. Im Falle von ferroelektrischen Materialien, wie beispielsweise Bariumtitanat (BaTiO₃), Blei-Zirkonat-Titanat (PZT), Strontium-Bismut-Tantalat (SrTiO₃) oder auch Mischungen aus den letzten beiden treten im Falle von thermisch induzierten Phasenübergängen Längenänderungen der Gitterkonstanten auf, die wiederum gerichtete Änderungen des Volumens des Trägersubstrats bewirken und Dehnungs- und Staucheffekte der aufgetragenen Dünnfilme bedingen. Durch das Anlegen einer elektrischen Spannung kann die temperaturabhängige und unter Umständen hysteretische Volumenänderung oder ein piezoelektrischer Effekt hervorgerufen werden. Außerdem kann zur Beeinflussung des Phasenübergangs bei einer Temperatur nahe der Phasenübergangstemperatur eine elektrische Spannung zum Hervorrufen von Längenänderungen in der Größenordnung von bis zu 1%, bevorzugt bis zu 0,1%, der Länge des Trägersubstart angelegt werden. Mit einer derartigen angelegten Spannung lässt sich die Lage der Phasenübergangstemperatur beeinflussen.

Hinsichtlich des Verfahrens wir die Aufgabe erfindungsgemäß gelöst durch ein Verfahren gemäß Anspruch 10.

Der Phasenübergangs-Zeitpunkt wird insbesondere anhand der mit dem jeweiligen Phasenübergang einhergehenden, insbesondere sprunghaften, Änderung, der zumindest einen physikalischen und/oder chemischen Eigenschaft, welche eine diese Eigenschaft charakterisierende physikalische oder chemische Größe gekennzeichnet ist, erkannt. Die jeweilige charakteristische physikalische oder chemische Größe wird beispielsweise als Funktion der Zeit aufgezeichnet, wobei sich aus dem Kurvenverlauf der exakte Zeitpunkt des Phasenübergangs bestimmen lässt.

Parallel hierzu werden die mittels des Temperatursensors gemessenen Temperatur-Messwerte ebenfalls als Funktion der Zeit aufgezeichnet. Dann lässt sich direkt in einer Vor-Ort-Auswerteelektronik des Thermometers, aber auch zu einem späteren Zeitpunkt, oder auch in einer entfernten Auswerteeinheit, derjenige Temperatur-Messwert ermitteln, welcher bestmöglich dem Moment des jeweiligen Phasenübergangs und somit einer der bekannten Fixpunkttemperaturen zuordnen lässt. Dabei handelt es sich um den zu jenem Zeitpunkt gemessenen Temperatur-Messwert, welcher den kürzesten zeitlichen Abstand zum Phasenübergangs-Zeitpunkt aufweist. Dadurch, dass die zumindest zwei Referenzelemente mittels genau zwei Anschlussdrähten kontaktiert sind, ist auch die Kontaktierung der Referenzelemente zur jeweiligen Auswerteelektronik besonders einfach realisierbar. Da jedes der zumindest zwei Referenzelemente über dieselben Anschlussdrähte kontaktiert ist, bedarf es insbesondere innerhalb der Auswerteelektronik keinerlei Mittel zur Unterscheidung zwischen den verschiedenen Referenzelementen.

Durch Bestimmung der Differenz zwischen diesem Temperatur-Messwert und der jeweiligen Phasenübergangstemperatur erfolgt schließlich die Kalibrierung und/oder Validierung des Temperatursensors bzw. des Thermometers. Eine Korrektur der Kennlinie des Temperatursensors, eine Angabe der Unsicherheit der Messung oder eine Angabe einer Kennliniendrift über einen definierten Zeitraum bzw. ihrer Historie sind ebenfalls möglich. Somit ist ebenfalls eine Zustandsüberwachung des Temperatursensors bzw. des Thermometers möglich.

Es ist dabei von Vorteil, wenn der zumindest eine Phasenübergangs-Zeitpunkt anhand einer Änderung der Kristallstruktur, und/oder einer Volumenänderung und/oder einer Änderung, insbesondere einer sprunghaften Änderung, der dielektrischen oder elektrischen Eigenschaften zumindest eines der Materialien zumindest eines der Referenzelemente erkannt wird.

Ebenso ist es von Vorteil, wenn die mittels des Temperatursensors ermittelten Temperatur-Messwerte und/oder die Änderung der Kristallstruktur, und/oder die Volumenänderung und/oder die Änderung, insbesondere sprunghafte Änderung, der dielektrischen oder elektrischen Eigenschaften des jeweiligen Materials als Funktion der Zeit aufgezeichnet werden.

Eine besonders bevorzugte Ausgestaltung des Verfahrens sieht vor, dass anhand eines Vergleichs der zumindest einen Phasenübergangstemperatur mit dem im Wesentlichen zeitgleich gemessenen Temperatur-Messwert erkannt wird, welches der zumindest zwei Referenzelemente einen Phasenübergang durchläuft. In diesem Fall unterscheiden sich Phasenübergangstemperaturen der zumindest zwei Referenzelemente bevorzugt um zumindest 1K. Durch einen Vergleich der jeweiligen Temperatur-Messwerte mit den jeweiligen bekannten Phasenübergangstemperaturen kann also nachträglich bestimmt werden, welchem der zumindest zwei Referenzelemente der jeweils aufgetretene Phasenübergang zuzuordnen ist.

In einer weiteren Ausgestaltung des Verfahrens werden der Temperatursensor und die zumindest zwei Referenzelemente im Wesentlichen derselben Umgebungstemperatur ausgesetzt. In diesem Falle ist eine sehr gute thermische Kopplung der zumindest zwei Referenzelemente erforderlich. Es versteht sich jedoch von selbst, dass im Falle schneller Temperaturänderungen verschiedene Referenzelemente zumindest vorübergehend auch unterschiedliche Temperaturen aufweisen können. In diesem Falle kann eine Auswerteelektronik beispielsweise die Temperaturgradienten als Funktion der Zeit erfassen. Erreicht der Einfluss der unterschiedlichen Ansprechzeiten auf die schnelle Temperaturänderung dann die angestrebte Genauigkeit der Kalibrierung und/oder Validierung, so kann die Kalibrierung verworfen werden. Ferner können aus den aufgezeichneten Temperaturwerten als Funktion der Zeit die am besten mit der jeweiligen Phasenübergangstemperatur übereinstimmenden Werte extrahiert werden. Weichen wiederum diese zu stark von der Phasenübergangstemperatur ab, so kann auf eine mangelhafte thermische Kopplung der jeweiligen Referenzelemente geschlossen werden.

In einer weiteren Ausgestaltung des Verfahrens wird die Vorrichtung geheizt oder gekühlt, um zumindest einen Phasenübergang in zumindest einem Material bei der jeweiligen Phasenübergangstemperatur zu induzieren. Das Heizen oder Kühlen des Thermometers, insbesondere des Teilbereichs des Thermometers, in dem sich der Temperatursensor und zumindest eines der zumindest zwei Referenzelemente befinden, kann dabei entweder durch ein dafür vorgesehenes Heizelement oder durch den Prozess selbst erreicht werden. Dafür kann bspw. ein CIP- oder SIP-Prozess in einer Anlage ausgenutzt werden.

Die in Zusammenhang mit der Vorrichtung erläuterten Ausgestaltungen lassen sich mutatis mutandis auch auf das vorgeschlagene Verfahren anwenden.

Die Erfindung wird anhand der nachfolgenden Zeichnungen näher erläutert. Es zeigt:
Fig. 1: eine schematische Darstellung eines Thermometers mit zwei separat kontaktierten Referenzelementen,
Fig. 2:drei mögliche Ausgestaltungen für ein aus fünf Referenzelementen aufgebautes Gesamt-Referenzelement,
Fig. 3: eine schematische Darstellung eines Thermometers mit einem Temperatursensor und einem mittels zwei Anschlussdrähten kontaktierten Gesamt-Referenzelements, und
Fig. 4 schematisch den Verlauf einer für einen Phasenübergang charakeristischen Größe eines Referenzelements sowie mittels eines Temperatursensors gemessene Temperatur-Messwerte je als Funktion der Zeit.

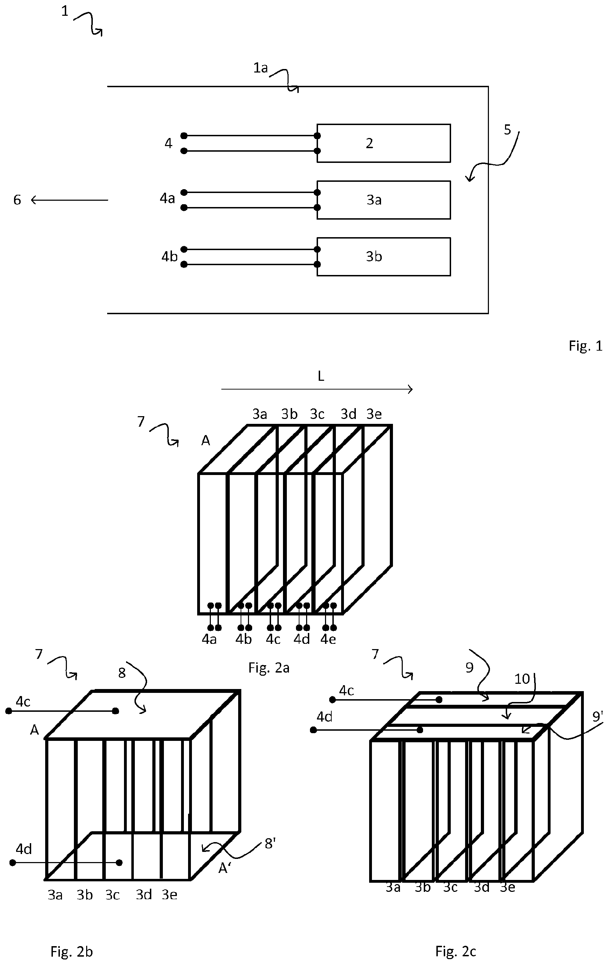

In Fig.1 ist eine schematische Abbildung eines Thermometers 1, bzw. eines Thermometereinsatzes gezeigt, in welchem ein Temperatursensor 2 sowie zwei Referenzelemente 3a und 3b angeordnet sind. Bei dem Temperatursensor 2 kann es sich beispielsweise um ein Widerstandselement handeln, während die zwei Referenzelemente 3a,3b beispielsweise jeweils durch ein Kondensatorelement gegeben sein können. In diesem Beispiel ist der Temperatursensor 2 mittels zweier Anschlussdrähte 4 kontaktiert, beispielsweise zur Beaufschlagung des Temperatursensors mit einem elektrischen Strom und zum Abgreifen einer Messspannung. Es versteht sich jedoch von selbst, dass auch die sogenannte Vier-Leiter-Technik angewendet werden kann. Im hier gezeigten Beispiel ist ferner das erste Referenzelement 3a über zwei Anschlussdrähte 4a und das zweite Referenzelement 3b über die Anschlussdrähte 4b kontaktiert.

Der Temperatursensor 2 sowie die beiden Referenzelemente 3,3a sind gemeinsam in einem, beispielsweise einen Teil eines Schutzrohres bildenden, Sensorkopf 1a angeordnet und mittels eines elektrisch isolierenden Materials 5 in dessen Spitze fixiert. Somit sind der Temperatursensor 2 sowie die beiden Referenzelemente 3a,3b weitgehend der gleichen Umgebungstemperatur ausgesetzt. Auf diese Weise können dynamische und/oder statische Messfehler minimiert werden.

In Fig. 1 nicht gezeigt ist ein ebenfalls integrierbarer Temperaturtransmitter, welcher beispielsweise am Sensorkopf 1a angebracht sein kann, und welcher zum Erzeugen von Temperatur-Messwerten des Temperatursensors 2 und/oder Referenzsignalen der Referenzelemente 3a,3b, welches Referenzsignal im Falle eines als Kondensatorelements ausgestalteten Referenzelements beispielsweise die Kapazität sein kann, dienen kann. Ein solcher Temperaturtransmitter kann beispielsweise auch eine Auswerteelektronik 6 enthalten. Es kann sowohl eine separate Auswerteelektronik 6 für den Temperatursensor 2 sowie für jedes Referenzelement 3a,3b implementiert werden, oder auch eine einzige gemeinsame Auswerteelektronik 6 verwendet werden. Der Sensorkopf 1a, bzw. das Schutzrohr kann ferner über einen Prozessanschluss verfügen, über den es bspw. an einen Behälter wie ein Rohr oder einen Tank angeschlossen werden kann.

In Fig. 2a ist schematisch ein Gesamt-Referenzelement 7 gezeigt, welches aus fünf entlang der horizontalen Achse L nebeneinander angeordneter streifenförmiger Referenzelemente 3a, 3b,3c,3d, 3e besteht, welche jeweils über zwei Anschlussdrähte 4a,4b,4c,4d,4e kontaktiert sind. Aus dieser schematischen Darstellung wird der hohe konstruktive Aufwand einer solchen Vorrichtung direkt deutlich.

Um ein derartiges Gesamtreferenz-Element 7 mittels genau zwei Anschlussdrähten 4c und 4d zu kontaktieren, kann das Gesamt-Referenzelement 7 von zumindest einer Seitenfläche A,A' parallel zur horizontalen Achse L zumindest teilweise mit einer elektrisch leitfähigen, insbesondere metallischen, Beschichtung 8,8' versehen ist. Eine solche Variante für ein Gesamt-Referenzelement 7 ist in Fig. 2b gezeigt, wobei das Gesamt-Referenzelement hier jeweils auf den zwei sich gegenüberliegenden Seitenflächen A und A' mit der elektrisch leitfähigen Beschichtung 8,8' versehen ist. An jede dieser Beschichtungen 8,8' ist dann ein Anschlussdraht 4c, 4d zur Kontaktierung des Gesamt-Referenzelements 7 angebracht. Es versteht sich von selbst, dass eine entsprechende Seitenfläche A,A' auch nur teilweise beschichtet sein kann. Jedoch sollte die Beschichtung 9,9' jedes der Referenzelemente 3a,3b,3c,3d,3e zumindest teilweise bedecken.

Eine weitere Möglichkeit, ein Gesamt-Referenzelement 7 derart auszugestalten, dass es mittels genau zwei Anschlussdrähten 4c,4d kontaktiert werden kann, ist schließlich in Fig. 2c dargestellt. In diesem Falle sind ein erster Teilbereich 9 und ein zweiter Teilbereich 9' der Seitenfläche A jeweils mit einer elektrisch leitfähigen, insbesondere metallischen Beschichtung beschichtet. Diese beiden Teilbereiche 9,9' sind durch eine zwischen Ihnen verlaufende Trennschicht 10 isoliert. In diesem Falle können beide Anschlussdrähte 4c,4d von der Seitenfläche A aus kontaktiert werden. Unabhängig von der genauen geometrischen Aufteilung der Seitenfläche A in zwei beschichtete Teilbereiche 9,9' und eine Trennschicht 10 sollte gewährleistet sein, dass jeder Teilbereich 9,9' sowie die Trennschicht jedes der Referenzelemente 3a,3b,3c,3d,3e zumindest teilweise bedeckt. Anstelle einer Trennschicht 10 kann ein der Trennschicht entsprechender Teilbereich der Seitenfläche A auch unbeschichtet bleiben.

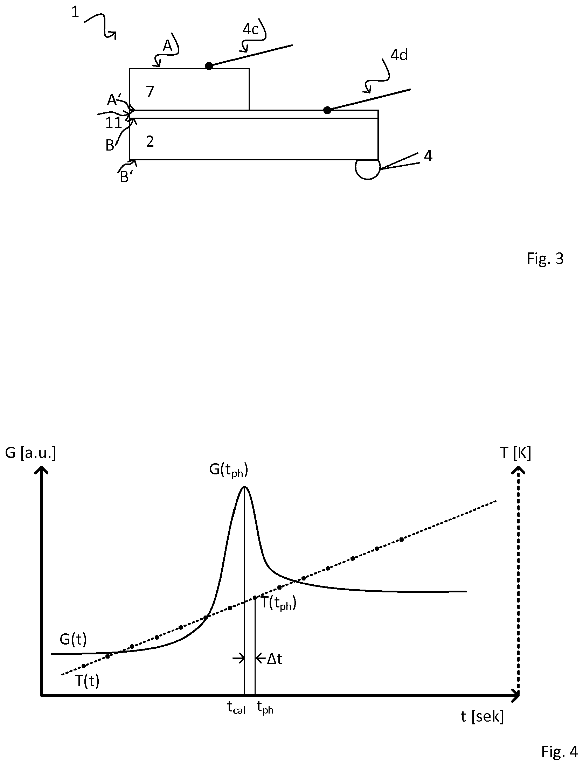

In Fig. 3 ist schließlich ein Thermometer 1, bzw. ein Thermometereinsatz mit einem Gesamt-Referenzelement 7 mit zumindest einer beschichteten Seitenfläche A und einem Temperatursensor 2 in Form eines Widerstandselements gezeigt. Das Gesamt-Referenzelement 7 und der Temperatursensor 2 weisen unterschiedliche Geometrien auf und sind direkt übereinander angeordnet. Die, wie beim Beispiel der Fig. 2b beschichtete erste Seitenfläche A des Gesamt-Referenzelements 7 ist kleiner als eine erste dem Gesamt-Referenzelement zugewandte und an das Gesamt-Referenzelement angrenzende Seitenfläche B des Temperatursensors 2.

Das Gesamt-Referenzelement ist im Bereich der Seitenfläche A beschichtet und mittels eines ersten Anschlussdrahts 4c elektrisch kontaktiert. Über eine Metallisierung 11 sind das Gesamt-Referenzelement 7 und der Temperatursensor 2 darüber hinaus miteinander verbunden und thermisch gekoppelt, derart dass sich die Seitenfläche A' des Gesamt-Referenzelements 7 und die Seitenfläche B des Temperatursensors direkt gegenüberliegen. Die Metallisierung kann insbesondere über einen Löt- oder Sinterprozess hergestellt werden. Weiterhin kann die Seitenfläche A' in diesem Ausführungsbeispiel optional ebenfalls beschichtet sein. Der zweite Anschlussdraht 4d zur Kontaktierung des Gesamt-Referenzelements ist in diesem Beispiel schließlich im Bereich der Metallisierung 11 an der ersten Seitenfläche B des Temperatursensors 2 angebracht. Der Temperatursensor 2 selbst ist dagegen über die an der Seitenfläche B' des Temperatursensors 2 angebrachten Anschlussdrähte 4 kontaktiert, welche in diesem Beispiel auf den Temperatursensor 2 aufgelötet sind.

Zur Illustrierung des erfindungsgemäßen Verfahrens ist in Fig. 4 schematisch der Verlauf einer für einen Phasenübergang charakteristischen Größe G in einer willkürlichen Einheit zumindest eines Referenzelements 3 sowie die mittels des Temperatursensors 2 gemessenen Temperatur-Messwerte T in Kelvin je als Funktion der Zeit G(t), T(t) gezeigt. Der Phasenübergang wird beispielsweise anhand einer Änderung der Kristallstruktur, und/oder einer Volumenänderung und/oder einer Änderung, insbesondere einer sprunghaften Änderung, der dielektrischen oder elektrischen Eigenschaften zumindest eines der Materialien zumindest eines der Referenzelemente erkannt. Bei der charakteristischen Größe kann es sich dann wiederum beispielsweise im Falle eines als Kondensatorelement ausgestalteten Referenzelements um die Dielektrizitätszahl ε handeln.

Die jeweils betrachtete Größe G des jeweils betrachteten Referenzelements 3 durchläuft zum Phasenübergangs-Zeitpunkt tₚₕ einen Phasenübergang bei einer Phasenübergangstemperatur Tₚₕ, welcher mit einer sprunghaften Änderung dieser Größe G zu diesem Zeitpunkt G(tₚₕ) einhergeht. Zur Kalibrierung und/oder Validierung des Temperatursensors 2 gilt es dann, denjenigen Temperaturmesswert T(t_{cal}), welcher zu einem Mess-Zeitpunkt t_{cal} gemessenen wurde, der den kürzesten zeitlichen Abstand Δt zum Phasenübergangs-Zeitpunkt tₚₕ aufweist, zu ermitteln. Aus einem Vergleich, insbesondere durch die Bildung der Differenz, der Phasenübergangstemperatur Tₚₕ mit dem Temperatur-Messwert T(t_{cal}) kann dann die Kalibrierung und/oder Validierung vorgenommen werden.

### Bezugszeichenliste

- 1: Thermometereinsatz
- 1a: Sensorkopf
- 2: Temperatursensor
- 3,3a,3b,3c,3d,3e: Referenzelemente
- 4,4a,4b,4c,4d,4e: Anshclussdrähte
- 5: Isolierendes Material
- 6: Auswerteelektronik
- 7: Gesamt-Referenzelement
- 8,8': Elektrisch leitfähige Beschichtung
- 9,9': erster und zweiter beschichteter Teilbereich
- 10: Trennschicht
- 11: Metallisierung
- L: Horizontale Achse
- A,A': Seitenfläche des Gesamt-Referenzelements parallel zu L
- B,B': Seitenfläche des Temperatursensors parallel zu L und/oder A Sich mit einem Phasenübergang ändernde charakteristische Größe
- G: Temperatur
- T:
- T_{Ph}: Phasenübergangstemperatur
- tₚₕ: Phasenübergangs-Zeitpunkt tₚₕ
- G(tₚₕ): Wert der charakteristischen Größe zum Zeitpunkt
- t_{cal}: Mess-Zeitpunkt, welcher am nächsten zu tₚₕ liegt
- T(t_{cal}): Temperatur-Messwert zum Zeitpunkt t_{cal}
- Δt: Zeitlicher Abstand zwischen tₚₕ und t_{cal}

## Patentansprüche

1. Vorrichtung (1) zur Bestimmung und/oder Überwachung der Temperatur (T) eines Mediums umfassend zumindest einen Temperatursensor (2) und zumindest zwei Referenzelemente (3,3a,3b) zur in situ Kalibrierung und/oder Validierung des Temperatursensors (2), wobei das erste Referenzelement (3a) zumindest teilweise aus einem ersten Material besteht, für welches erste Material im zur Kalibrierung des Temperatursensors (2) relevanten Temperaturbereich zumindest ein Phasenübergang zumindest zweiter Ordnung bei zumindest einer ersten vorgegebenen Phasenübergangstemperatur (T_{ph,1}) auftritt, wobei das zweite Referenzelement (3b) zumindest teilweise aus einem zweiten Material besteht, für welches zweite Material im zur Kalibrierung des Temperatursensors relevanten Bereich zumindest ein Phasenübergang zumindest zweiter Ordnung bei zumindest einer zweiten vorgegebenen Phasenübergangstemperatur (T_{ph,2}) auftritt, dass die zumindest zwei Referenzelemente (3a,3b,3c,3d,3e) entlang einer gedachten horizontalen Achse (L) nebeneinander in Form eines Gesamt-Referenzelements (7) angeordnet sind, welches Gesamt-Referenzelement (7) im Bereich zumindest einer oder im Bereich von zwei gegenüberliegenden Seitenflächen (A,A') parallel zu der gedachten horizontalen Achse (L) zumindest teilweise mit einer elektrisch leitfähigen, insbesondere metallischen, Beschichtung (8,8') versehen ist/sind derart, dass die Beschichtung (8,8') jedes der zumindest zwei Referenzelemente (3a,3b,3c,3d,3e) zumindest teilweise bedeckt, und **gekennzeichnet dadurch, dass** das Gesamt-Referenzelement (7) über genau zwei Anschlussdrähte (4c,4d) kontaktiert ist.

2. Vorrichtung nach Anspruch 1,
**gekennzeichnet dadurch,**
**dass** es sich zumindest bei einem der zumindest zwei, insbesondere in Form eines Festkörpers vorliegenden Materialien, um ein ferroelektrisches Material oder um ein ferromagnetisches Material handelt.

3. Vorrichtung nach zumindest einem der vorhergehenden Ansprüche,
**gekennzeichnet dadurch,**
**dass** zumindest ein Phasenübergang in zumindest einem der zumindest zwei Materialien zu einer Änderung der Kristallstruktur, und/oder zu einer Volumenänderung und/oder zu einer Änderung, insbesondere einer sprunghaften Änderung, der dielektrischen oder elektrischen Eigenschaften des jeweiligen Materials führt.

4. Vorrichtung nach zumindest einem der vorhergehenden Ansprüche,
**gekennzeichnet dadurch,**
**dass** zumindest ein Phasenübergang in zumindest einem der zumindest zwei Materialien mit einem Übergang von einem paramagnetischen zu einem ferromagnetischen, von einem ferromagnetischen in einen paramagnetischen, von einem ferroelektrischen zu einem paraelektrischen und/oder von einem paraelektrischen zu einem ferroelektrischen Zustand einhergeht.

5. Vorrichtung nach zumindest einem der vorhergehenden Ansprüche,
**gekennzeichnet dadurch,**
**dass** der Temperatursensor (2) und die zumindest zwei Referenzelemente (3a,3b,3c,3d,3e) in einem einzigen Sensorkopf (1a) angeordnet sind.

6. Vorrichtung nach zumindest einem der vorhergehenden Ansprüche,
**gekennzeichnet dadurch,**
**dass** die zumindest zwei Referenzelemente (3a,3b,3c,3d,3e') streifenförmig ausgestaltet sind.

7. Vorrichtung nach Anspruch 6,
**gekennzeichnet dadurch,**
**dass** das Gesamt-Referenzelement (7) und der Temperatursensor (2) im Wesentlichen direkt nebeneinander oder übereinander angeordnet sind, wobei zumindest eine zumindest teilweise beschichtete erste Seitenfläche des Gesamt-Referenzelements (A,A') kleiner ist als eine erste dem Gesamt-Referenzelement (7) zugewandte und an das Gesamt-Referenzelement (7) angrenzende Seitenfläche (B) des Temperatursensors (2), wobei ein erster Anschlussdraht (4c) zur Kontaktierung des Gesamt-Referenzelements (7) im Bereich der ersten Seitenfläche (A) des Gesamt-Referenzelements (7) angebracht ist, und wobei ein zweiter Anschlussdraht (4d) an der ersten Seitenfläche (B) des Temperatursensors (2) angebracht ist.

8. Vorrichtung nach Anspruch 6,
**gekennzeichnet dadurch,**
**dass** die zumindest eine zumindest teilweise beschichtete Seitenfläche (A,A') des Gesamt-Referenzelements (7) derart ausgestaltet ist, dass zumindest ein erster (9) und ein zweiter Teilbereich (9') beschichtet sind, welche beiden Teilbereiche (9,9') durch eine elektrisch isolierende Trennschicht (10) voneinander isoliert sind, wobei zumindest die beiden Teilbereiche (9,9') jedes der zumindest zwei Referenzelemente (3a,3b,3c,3d,3e) zumindest teilweise bedecken.

9. Vorrichtung nach zumindest einem der vorhergehenden Ansprüche,
**gekennzeichnet dadurch,**
**dass** sich zumindest die erste (T_{ph,1}) und die zweite Phasenübergangstemperatur (T_{ph,2}) um zumindest 1K unterscheiden.

10. Verfahren zur in situ Kalibrierung einer Vorrichtung (1) nach zumindest einem der vorhergehenden Ansprüche,
umfassend zumindest folgende Verfahrensschritte:
- Ermitteln zumindest eines Phasenübergangs-Zeitpunkts (tₚₕ), zu welchem zumindest eine Phasenübergangstemperatur (Tₚₕ) erreicht wird, zumindest eines der Referenzelemente (3),
- Ermitteln eines mittels des Temperatursensors (2) gemessenen Temperatur-Messwerts T(T_{cal}), welcher zu einem Mess-Zeitpunkt (t_{cal}) gemessen wurde, der den kürzesten zeitlichen Abstand (Δt) zum Phasenübergangs-Zeitpunkt (tₚₕ) aufweist,
- Kalibrierung des Temperatursensors (2) anhand eines Vergleichs der zumindest einen Phasenübergangstemperatur (Tₚₕ) mit dem Temperatur-Messwert (T(t_{cal})).

11. Verfahren nach Anspruch 10,
**gekennzeichnet dadurch,**
**dass** der zumindest eine Phasenübergangs-Zeitpunkt (tₚₕ) anhand einer Änderung der Kristallstruktur, und/oder einer Volumenänderung und/oder einer Änderung, insbesondere einer sprunghaften Änderung, der dielektrischen oder elektrischen Eigenschaften zumindest eines der Materialien zumindest eines der Referenzelemente (3) erkannt wird.

12. Verfahren nach Anspruch 10 oder 11,
**gekennzeichnet dadurch,**
**dass** die mittels des Temperatursensors (2) ermittelten Temperatur-Messwerte (T) und/oder die Änderung der Kristallstruktur, und/oder die Volumenänderung und/oder die Änderung, insbesondere sprunghafte Änderung, der dielektrischen oder elektrischen Eigenschaften des jeweiligen Materials als Funktion der Zeit (T(t), G(t)) aufgezeichnet werden.

13. Verfahren nach zumindest einem der Ansprüche 10-12,
**gekennzeichnet dadurch,**
**dass** anhand eines Vergleichs der zumindest einen Phasenübergangstemperatur (Tₚₕ) mit dem im Wesentlichen zeitgleich gemessenen Temperatur-Messwert (T(t_{cal})) erkannt wird, welches der zumindest zwei Referenzelemente (3) einen Phasenübergang durchläuft.

14. Verfahren nach zumindest einem der Ansprüche 10-13,
**gekennzeichnet dadurch,**
**dass** der Temperatursensor (2) und zumindest die zwei Referenzelemente (3,3a,3b,3c,3d,3e) im Wesentlichen derselben Umgebungstemperatur ausgesetzt werden.

15. Verfahren nach zumindest einem der Ansprüche 10-14,
**gekennzeichnet dadurch,**
**dass** die Vorrichtung (1) geheizt oder gekühlt wird, um zumindest einen Phasenübergang in zumindest einem Material bei der jeweiligen Phasenübergangstemperatur (Tₚₕ) zu induzieren.

## Claims

1. Apparatus (1) for determining and/or monitoring the temperature (T) of a medium, comprising at least a temperature sensor (2) and at least two reference elements (3, 3a, 3b) for the in situ calibration and/or validation of the temperature sensor (2),
wherein the first reference element (3a) at least partially consists of a first material, wherein, for said first material, at least one phase transition of at least the second order occurs in the temperature range relevant for the calibration of the temperature sensor (2) at at least a first predefined phase transition temperature (T_{ph,1}),
wherein the second reference element (3b) at least partially consists of a second material, wherein, for said second material, at least one phase transition of at least the second order occurs in the range relevant for the calibration of the temperature sensor at at least a second predefined phase transition temperature (T_{ph,2}),
wherein the at least two reference elements (3a, 3b, 3c, 3d, 3e) are arranged along an imaginary horizontal axis (L), side-by-side in the form of a global reference element (7), wherein said global reference element (7) is provided at least in part with an electrically conductive coating (8, 8'), particularly a metal coating, in the area of at least one lateral surface or in the area of two opposite lateral surfaces (A, A') parallel to the imaginary horizontal axis (L) in such a way that the coating (8, 8') covers each of the at least two reference elements (3a, 3b, 3c, 3d, 3e) at least in part, and **characterized in that**
the global reference element (7) is contacted via precisely two connecting wires (4c, 4d).

2. Apparatus as claimed in Claim 1,
**characterized in that**
at least one of the at least two materials, particularly present in the form of a solid body, is a ferroelectric material or a ferromagnetic material.

3. Apparatus as claimed in at least one of the previous claims,
**characterized in that**
at least one phase transition in at least one of the at least two materials results in a change in the crystalline structure, and/or in a volume change and/or in a change, particularly in an erratic change, in the dielectric or electric properties of the respective material.

4. Apparatus as claimed in at least one of the previous claims,
**characterized in that**
at least one phase transition in at least one of the at least two materials is associated with a transition from a paramagnetic state to a ferromagnetic state, from a ferromagnetic state to a paramagnetic state, from a ferroelectric state to a paraelectric state and/or from a paraelectric state to a ferroelectric state.

5. Apparatus as claimed in at least one of the previous claims,
**characterized in that**
the temperature sensor (2) and the at least two reference elements (3a, 3b, 3c, 3d, 3e) are arranged in a single sensor head (1a).

6. Apparatus as claimed in at least one of the previous claims,
**characterized in that**
the at least two reference elements (3a, 3b, 3c, 3d, 3e) are designed in the form of strips.

7. Apparatus as claimed in Claim 6,
**characterized in that**
the global reference element (7) and the temperature sensor (2) essentially are arranged directly beside one another or above one another, wherein at least a first lateral surface of the global reference element (A, A'), which is at least partially coated, is smaller than a first lateral surface (B) of the temperature sensor (2), said surface facing towards the global reference element (7) and being adjacent to said global reference element (7), wherein a first connecting wire (4c) for contacting the global reference element (7) is provided in the area of the first lateral surface (A) of the global reference element (7), and a second connecting wire (4d) is provided on the first lateral surface (B) of the temperature sensor (2).

8. Apparatus as claimed in Claim 6,
**characterized in that**
the at least one lateral surface (A, A') of the global reference element (7), which is at least partially coated, is designed in such a way that at least a first subsection (9) and a second subsection (9') are coated, wherein said two subsections (9, 9') are isolated from one another by an electrically insulating separation layer (10),
wherein at least the two subzones (9, 9') at least partially cover each of the at least two reference elements (3a, 3b, 3c, 3d, 3e).

9. Apparatus as claimed in at least one of the previous claims,
**characterized in that**
at least the first phase transition temperature (T_{ph,1}) and the second phase transition temperature (T_{ph,2}) differ from one another by at least 1 K.

10. Procedure for the in situ calibration of an apparatus (1) as claimed in at least one of the previous claims,
comprising at least the following procedural steps:
- Determination of at least one phase transition time (tₚₕ) - at which at least a phase transition temperature (Tₚₕ) is reached - of at least one of the reference elements (3),
- Determination of a temperature measured value T(T_{cal}) measured with the temperature sensor (2), said value being measured at a measuring time (t_{cal}) that presents the shortest time interval (Δt) in relation to the phase transition time (tₚₕ),
- Calibration of the temperature sensor (2) on the basis of a comparison of the at least one phase transition temperature (Tₚₕ) with the temperature measured value (T(t_{cal})).

11. Procedure as claimed in Claim 10,
**characterized in that**
the at least one phase transition time (tₚₕ) is identified on the basis of a change in the crystalline structure, and/or a change in the volume and/or a change,
particularly an erratic change, in the dielectric or electric properties of at least one of the materials of at least one of the reference elements (3).

12. Procedure as claimed in Claim 10 or 11,
**characterized in that**
the temperature measured values (T), determined using the temperature sensor (2), and/or the change in the crystalline structure, and/or the change in volume and/or the change, particularly the erratic change, of the dielectric or electric properties of the relevant material are recorded as a function of time (T(t), G(t)).

13. Procedure as claimed in at least one of the Claims 10 to 12,
**characterized in that**
a comparison of the at least one phase transition temperature (Tₚₕ) with the temperature measured value (T(t_{cal})), which is measured essentially simultaneously, is used to identify which of the at least two reference elements (3) is going through a phase transition.

14. Procedure as claimed in at least one of the Claims 10 to 13,
**characterized in that**
the temperature sensor (2) and at least the two reference elements (3, 3a, 3b, 3c, 3d, 3e) are essentially exposed to the same ambient temperature.

15. Procedure as claimed in at least one of the Claims 10 to 14,
**characterized in that**
the apparatus (1) is heated or cooled in order to induce at least one phase transition in at least one material at the respective phase transition temperature (Tₚₕ).

## Revendications

1. Dispositif (1) destiné à la détermination et/ou la surveillance de la température (T) d'un produit, comprenant au moins un capteur de température (2) et au moins deux éléments de référence (3, 3a, 3b) pour l'étalonnage sur site et la validation du capteur de température (2),
pour lequel le premier élément de référence (3a) est constitué au moins partiellement d'un premier matériau, pour lequel au moins une transition de phase au moins de second ordre se produit dans la gamme de température pertinente pour l'étalonnage du capteur de température (2) à au moins une première température de transition de phase (T_{ph,1}) prédéterminée,
pour lequel le deuxième élément de référence (3b) est constitué au moins partiellement d'un deuxième matériau, pour lequel au moins une transition de phase au moins de second ordre se produit dans la gamme de température pertinente pour l'étalonnage du capteur de température (2) à au moins une deuxième température de transition de phase (T_{ph,2}) prédéterminée,
les au moins deux éléments de référence (3a, 3b, 3c, 3d, 3e) étant disposés le long d'un axe horizontal (L) imaginaire, côte-à-côte sous la forme d'un élément de référence global (7), lequel élément de référence global (7) étant parallèle à l'axe horizontal (L) imaginaire dans la zone d'au moins une ou dans la zone de deux surfaces latérales (A, A') opposées, la ou les surfaces étant munies au moins partiellement d'un revêtement (8, 8') électroconducteur, notamment métallique, de telle sorte que le revêtement (8, 8') recouvre chacun des aux moins deux éléments de référence (3a, 3b, 3c, 3d, 3e), et **caractérisé**
**en ce que** l'élément de référence global (7) est mis en contact au moyen d'exactement deux fils de raccordement (4c, 4d).

2. Dispositif selon la revendication 1,
**caractérisé**
**en ce que**, concernant l'un des au moins deux matériaux, notamment présent sous la forme d'un corps solide, il s'agit d'un matériau ferroélectrique ou d'un matériau ferromagnétique.

3. Dispositif selon au moins l'une des revendications précédentes,
**caractérisé**
**en ce qu'**au moins une transition de phase dans au moins l'un des au moins deux matériaux conduit à un changement de la structure cristalline, et/ou à un changement de volume et/ou à un changement, notamment à un changement brusque, des propriétés diélectriques ou électriques du matériau respectif.

4. Dispositif selon au moins l'une des revendications précédentes,
**caractérisé**
**en ce qu'**au moins une transition de phase dans au moins l'un des au moins deux matériaux est accompagnée d'une transition d'un état paramagnétique à un état ferromagnétique, d'un état ferromagnétique à un état paramagnétique, d'un état ferroélectrique à un état paraélectrique et/ou d'un état paraélectrique à un état ferroélectrique.

5. Dispositif selon au moins l'une des revendications précédentes,
**caractérisé**
**en ce que** le capteur de température (2) et les au moins deux éléments de référence (3a, 3b, 3c, 3d, 3e) sont disposés dans une unique tête de capteur (1a).

6. Dispositif selon au moins l'une des revendications précédentes,
**caractérisé**
**en ce que** les au moins deux éléments de référence (3a, 3b, 3c, 3d, 3e) sont conçus en forme de bandes.

7. Dispositif selon la revendication 6,
**caractérisé**
**en ce que** l'élément de référence global (7) et le capteur de température (2) sont pour l'essentiel directement juxtaposés ou superposés, au moins une surface latérale de l'élément de référence global (A, A'), laquelle surface est au moins partiellement revêtue, étant plus petite qu'une première surface latérale (B) du capteur de température (2), laquelle surface est tournée vers l'élément de référence global (7) et est adjacente à l'élément de référence global (7), un premier fil de raccordement (4c) étant prévu pour mettre en contact l'élément de référence global (7) dans la zone de la première surface latérale (A) de l'élément de référence global (7), et un deuxième fil de raccordement (4d) étant prévu sur la première surface latérale (B) du capteur de température (2).

8. Dispositif selon la revendication 6,
**caractérisé**
**en ce que** l'au moins une surface latérale (A, A') de l'élément de référence global (7), laquelle surface est au moins partiellement revêtue, est conçue de telle sorte qu'au moins une première zone partielle (9) et une deuxième zone partielle (9') sont revêtues, lesquelles deux zones partielles (9, 9') sont isolées l'une de l'autre par une couche de séparation (10) assurant une isolation électrique, au moins les deux zones partielles (9, 9') de chacun des au moins deux éléments de référence (3a, 3b, 3c, 3d, 3e) étant recouvertes au moins partiellement.

9. Dispositif selon au moins l'une des revendications précédentes,
**caractérisé**
**en ce qu'**au moins la première température de transition de phase (T_{ph,1}) et la deuxième température de transition de phase (T_{ph,2}) se différencient d'au moins 1 K.

10. Procédé destiné à l'étalonnage sur site d'un dispositif (1) selon au moins l'une des revendications précédentes,
comprenant au moins les étapes de procédé suivantes :
- Détermination d'au moins un instant de transition de phase (tₚₕ), auquel au moins une température de transition de phase (Tₚₕ) est atteinte pour au moins l'un des éléments de référence (3),
- Détermination d'une valeur de température T(T_{cal}) mesurée au moyen du capteur de température (2), laquelle valeur a été mesurée à un instant de mesure (t_{cal}) présentant l'intervalle de temps (Δt) le plus court par rapport à l'instant de transition de phase (tₚₕ),
- Étalonnage du capteur de température (2) au moyen d'une comparaison de l'au moins une température de transition de phase (Tₚₕ) avec la valeur mesurée de température (T(t_{cal})).

11. Procédé selon la revendication 10,
**caractérisé**
**en ce que** l'au moins un instant de transition de phase (tₚₕ) est identifié au moyen d'un changement de la structure cristalline, et/ou d'un changement de volume et/ou d'un changement, notamment d'un changement brutal, des propriétés diélectriques ou électriques au moins de l'un des matériaux d'au moins l'un des éléments de référence (3).

12. Procédé selon la revendication 10 ou 11,
**caractérisé**
**en ce que** les valeurs mesurées de température (T), déterminées au moyen du capteur de température (2), et/ou le changement de la structure cristalline, et/ou le changement de volume et/ou le changement, notamment le changement brutal,
des propriétés diélectriques ou électriques du matériau respectif sont enregistrés en fonction du temps (T(t), G(t)).

13. Procédé selon au moins l'une des revendications 10 à 12,
**caractérisé**
**en ce qu'**au moyen d'une comparaison de l'au moins une température de transition de phase (Tₚₕ) avec la valeur mesurée de température (T(t_{cal})), laquelle est mesurée pour l'essentiel simultanément, on identifie lequel des au moins deux éléments de référence (3) traverse une transition de phase.

14. Procédé selon au moins l'une des revendications 10 à 13,
**caractérisé**
**en ce que** le capteur de température (2) et au moins les deux éléments de référence (3, 3a, 3b, 3c, 3d, 3e) sont exposés pour l'essentiel à la même température ambiante.

15. Procédé selon au moins l'une des revendications 10 à 14,
**caractérisé**
**en ce que** le dispositif (1) est chauffé ou refroidi, afin d'induire au moins une transition de phase dans au moins un matériau à la température de transition de phase (Tₚₕ) respective.
